# EUROPEAN PATENT APPLICATION

(11) **EP 2 481 916 A1**
(43) Date of publication of application: **01.08.2012**
(21) Application number: 11000595.6
(22) Date of filing: 26.01.2011
(51) Int. Cl.: F03D 7/02, F03D 7/04

(54) **Wind turbine power production system with hydraulic transmission**

(71) Applicant: CHAPDRIVE AS, 7030 Trondheim (NO)
(72) Inventor: Chapple, Peter, Bradford-on-Avon (GB); Niss, Michael, Odegaard, Kuch, 9510 Arden (DK)
(74) Representative: Fluge, Per Roald

(57) **Abstract**

A wind turbine power production system (1) and a method for controlling a wind turbine power production system (1), with, an electric generator (20) and a closed loop hydraulic transmission system (10) comprising a hydraulic pump (11), and a hydraulic motor (12) with a variable displacement (d). The wind turbine power production system (1) further comprises a control unit (30) arranged for continuously; predicting a current estimated wind speed (v*) of a wind acting on the turbine rotor (2) based on at least hydraulic pressure (ph) represented by a high pressure measurement signal (44), calculating an optimised turbine rotational speed (ωₚ*) of the turbine rotor (2) based on at least the estimated wind speed (v*), and sending a displacement control signal (32) to control the variable displacement (d) of the hydraulic motor to maintain the turbine rotational speed (ωₚ) at the same value as the optimised turbine rotational speed (ωₚ*) to maintain an optimised tip speed ratio for the turbine rotor (2).

## Description

### Technical field

The present invention relates to the field of wind turbines used for producing electrical energy, and more particularly to the control of wind turbines for optimization of the wind turbine under fluctuating wind conditions where a hydrostatic transmission system is used to transfer energy between the turbine rotor and a synchronous generator directly connected to an electric grid.

### Background art

Wind power plants with a wind turbine powering a hydraulic pump with a transmission to a hydraulic motor have long been known.

In German patent publication 30 25 563 (Calzoni) a hydraulic transmission for wind power plants is proposed, where the starting is controlled manually by a shunt valve and the maximum operating pressure is limited by a pressure control valve. No control is provided for maintaining a fixed hydraulic motor speed or optimising the operation of the turbine.

Japanese patent application 61212674 (Matsushita Seiko) describes a wind power plant with a hydraulic pump and electric generator assembly arranged at the foundation of the wind turbine tower.

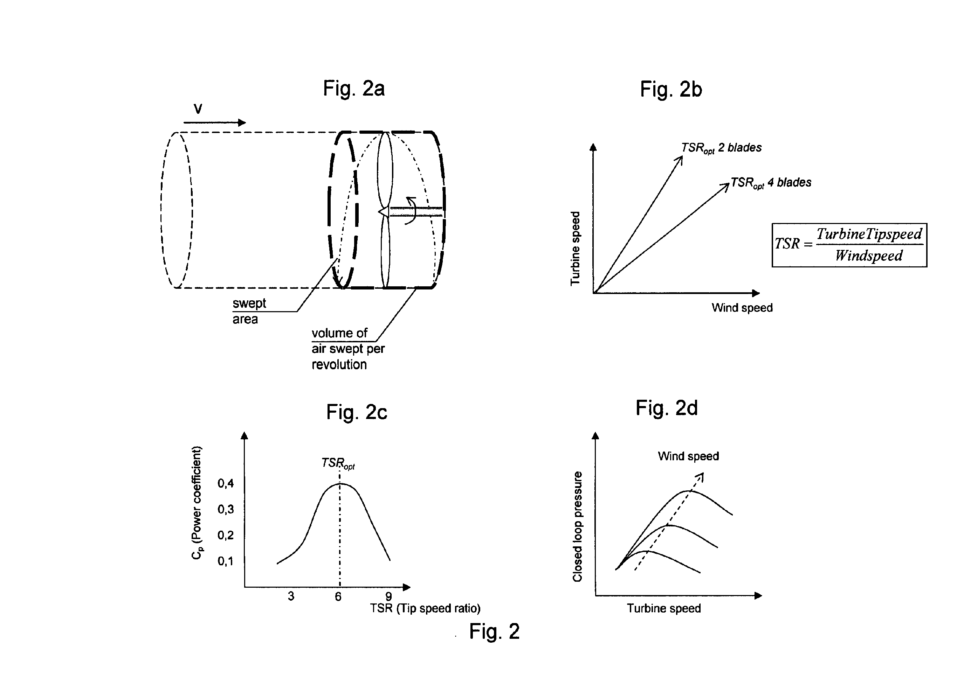

For any turbine, it is not possible to convert all kinetic energy in the wind to shaft power since wind must be able to exit the turbine. The theoretical maximum power that could be obtained in a turbine relative to the kinetic energy in the moving wind mass is the so-called Betz limit: Cp_max = 0,59 as is known by a person skilled in the art. This is illustrated in Fig. 2a in which an imagined wind volume cylinder moving with the speed of the wind, blowing through a rotating propeller of a wind turbine. The circle described by the rotating wing tip is the area swept by the turbine, and the length of the cylinder of air passing the turbine in one revolution of the turbine is indicated. When the wind speed increases the imagined cylinder moves faster towards the turbine and the turbine rotational speed or pitch angle must change in order to exploit all the energy of the moving wind mass. The ratio between the turbine tip speed and the wind speed is the so-called the tip speed ratio (TSR). The optimised tip speed ratio is a linear relationship between turbine speed and wind as can be seen in Fig. 2b. The optimised tip speed ratio will vary with the design of the turbine. A turbine with 4 blades will typically have a lower optimised tip speed ratio than a turbine with 2 blades. In Fig 2c a graph of the power coefficient Cp versus TSR, the tip speed ratio for a given turbine design, is illustrated. The power coefficient Cp for the illustrated example has a maximum Cp of about 0.4 for a TSR value of about 6. If the turbine is made to run slower, i.e. if the tip speed ratio is decreased, the power coefficient is reduced. Likewise, if the turbine runs too fast, i.e. if the tip speed ratio is increased, the power coefficient will also decrease. Thus, it is important to keep the tip speed ratio very close to the value that gives the maximum power coefficient at the top of the curve. This can also be seen by examining how the hydraulic pressure in the closed loop varies as a function of turbine rotational speed and wind speed. This is shown in Fig 2d where increased wind speed should result in increased turbine speed to maximize closed loop pressure. However, the maximum turbine efficiency does not necessarily coincide with maximum hydraulic pressure.

The majority of installed wind turbine power production systems have employed a fixed mechanical transmission between the turbine rotor and the electric generator. It is known from prior art to optimize such a wind turbine power production by measuring the wind speed, e.g. with an anemometer and changing the Tip Speed Ratio by controlling the turbine pitch angle according to the variation in measured wind speed.

The wind speed acting on a wind turbine rotor varies considerably with the height above the ground or sea level, and an anemometer arranged in one location will only be able to measure the wind speed in that specific location. Given the height and size of modern wind turbines used for feeding the electric grid, these variations in wind speed may be considerable. Wind distribution models based on statistical data may be used to improve the results, but such results will still represent a large degree of uncertainty and will not reflect rapid wind fluctuations acting on the wind turbine. On the other hand, rapid fluctuations acting on the anemometer, and maybe only on a small area of the swept turbine area close to the anemometer could lead the control system to optimise operation based on the local variations that in turn may lower the overall efficiency. To overcome this problem systems according to prior art use longer integration times for calculating an average wind speed and they will therefore not be able to optimise turbine performance based on rapid fluctuations in wind.

Traditionally wind turbines with varying turbine speed use so called Double Fed Induction Generators, DFIG, but Permanent Magnet Synchronous Generators, PMG are becoming increasingly popular due to their better overall characteristics and efficiency, especially at partial speed in wind turbine systems. For DFIG the voltage on the stator is applied from the electric grid and the voltage on the rotor is induced by the power converter, allowing a variable-speed operation over a restricted, range. The variable rotor current is controlled by the converter to align the output frequency of the generator with the frequency of the electric grid. Wind turbines with PMG directly driven by the wind turbine use full conversion, i.e. decoupling of the generator from the grid by one converter on the generator side and one converter on the grid side with a DC link in between. In both cases converters are used between the generators and the electric grid, and requirements of the grid are met by controlling the converters.

International patent application WO2007053036 (Chapple) describes a wind turbine power production system with a closed loop hydraulic transmission system arranged for being driven by a turbine rotor driven by a fluid having a fluid speed varying in time and driving an electric generator. The fluid speed is measured by a fluid speed meter and used as an input to a control system for maintaining a set TSR by continuously adjusting a volumetric displacement of the hydraulic motor of the hydraulic transmission system.

### Short summary

The present invention discloses a wind turbine power production system and method for controlling a wind turbine power production system with a closed loop hydrostatic transmission system and a synchronous generator directly connected to the grid.

One of the main advantages of the present invention is its increased efficiency compared to prior art technology, i.e. the ability of the wind turbine power production system to convert the energy in the wind to electrical energy during varying wind conditions and thereby increasing the Annual Energy Production (AEP) of the power production system. This is achieved by a method and a system disclosed in this document that is able to exploit the power in wind fluctuations that may not have been utilised before due to the limitations in prior art technology. The improved efficiency of the system is related to one or more of turbine speed optimization, drive train responsiveness, reduction of components and the control system.

In an embodiment the invention is a wind turbine power production system (1) comprising, a turbine rotor (2) with a turbine rotational speed (ωₚ), an electric generator (20) and a closed loop hydraulic transmission system (10) comprising a hydraulic pump (11) and a hydraulic motor (12) with a variable displacement (d), the hydraulic transmission system (10) arranged for the transfer of mechanical energy from the turbine rotor (2) to the electric generator (20), the wind turbine power production system (1) further comprising a control unit (30) arranged for continuously;
- receiving a high pressure measurement signal (44) representing a hydraulic pressure (ph) of the closed loop hydraulic transmission system (10),
- predicting an estimated wind speed (v*) of a wind acting on the turbine rotor (2) based on at least the hydraulic pressure (ph) represented by the high pressure measurement signal (44),
- calculating an optimised turbine rotational speed (ωₚ*) of the turbine rotor (2) based on at least the estimated wind speed (v*),
- sending a displacement control signal (32) to control the variable displacement (d) of the hydraulic motor to maintain the turbine rotational speed (ωₚ) at the same value as the optimised turbine rotational speed (wₚ*),
   to maintain an optimised tip speed ratio for the turbine rotor (2). The hydraulic pressure in the low pressure line (14) may be kept at a constant value by a boost system of the hydraulic transmission system (10) as will be understood by a person skilled in the art.

In an embodiment the invention is also a method for controlling a wind turbine power production system (1), wherein the wind turbine power production system (1) comprises, a turbine rotor (2) with a turbine rotational speed (ωₚ), a synchronous electric generator (20) and a closed loop hydraulic transmission system (10) comprising a hydraulic pump (11) and a hydraulic motor (12) with a variable displacement (d), the hydraulic transmission system (10) arranged for the transfer of mechanical energy from the turbine rotor (2) to the synchronous electric generator (20), the wind turbine power production system (1) further comprising a control unit (30), the method comprising the following steps;
- receiving in the control unit (30) a high pressure measurement signal (44) representing a hydraulic pressure (ph) of the closed loop hydraulic transmission system (10),
- predicting in the control unit (30) an estimated wind speed (v*) of a wind acting on the turbine rotor (2) based on at least the hydraulic pressure (ph) represented by the high pressure measurement signal (44),
- calculating in the control unit (30) an optimised turbine rotational speed (ωₚ*) of the turbine rotor (2) based on at least the estimated wind speed (v*), - sending a displacement control signal (32) from the control unit (30) to control the variable displacement (d) of the hydraulic motor to maintain the turbine rotational speed (ωₚ) at the same value as the optimised turbine rotational speed (ωₚ*), to maintain an optimised tip speed ratio for the turbine rotor (2).

The fast and accurate wind estimate together with a fast responsiveness of the control unit and the drive train according to the invention has the additional advantage that the wind turbine system is able to absorb shock loads as a result of fast wind speed fluctuations better than prior art systems. This in turn may lead to reduced requirements for the mechanical support and structures of the wind turbine power production system.

An advantage of the invention is that the optimum turbine speed can be continuously calculated as a function of the wind speed acting on the turbine without measuring the wind speed with a separate anemometer. Large turbine rotors may have a diameter of 100 - 150 meters, and an anemometer arranged near the turbine, or in the swept area of the turbine, cannot easily measure accurately the wind speed acting on the turbine. Wind speed varies with the height above ground or sea level, and will also be affected by the turbine rotor that reduces the wind speed. In addition wind speed will fluctuate differently from one point to another within the swept area of the turbine. According to the invention the wind turbine itself is used as an anemometer where the wind speed is continuously estimated from system characteristics that vary according to the wind speed of the wind acting on the system.

Another advantage of the invention is that the number of mechanical and electrical components may be reduced and thus reducing installation and maintenance costs. As already mentioned above the anemometer is not required for the purpose of turbine speed optimization. In addition the synchronous generator can be directly connected to the electric grid without the use of electric converters. Electric converters may have a limited operational region and may introduce losses between the generator and the electric grid resulting in a reduced efficiency of the overall system that can be reduced or eliminated by use of the current invention.

According to the invention the power factor of the power delivered to the grid can be controlled without the use of electric converters between the synchronous generator and the electric grid.

The system and method according to the invention is based on a hydraulic transmission system between the turbine rotor and the synchronous generator. Such systems further reduces the need for mechanical components. Considering that about 30 % of the downtime for a conventional wind turbine is related to the mechanical gearbox and that the centre of the turbine extends 100 to 150 m above the ground or sea level, it is easy to understand that the deployment and maintenance of conventional systems with mechanical gears in the nacelle is both costly and difficult.

Hydraulic transmission systems allow for more flexibility regarding the location of the electric generator. The weight of a 5MW generator and the associated mechanical gear is typically 50 000 to 200 000 kg and the relocation of the generator away from the top portion of the tower in a wind turbine power production system removes a significant part of the weight from the top portion of the tower. Instead the generator may be arranged on the ground or in the lower part of the tower. Such an arrangement of the hydrostatic motor and the generator on the ground level will further ease the supervision and maintenance of these components, because they may be accessed at the ground level.

### Brief description of the figures in the drawings

The attached drawing figures is meant to illustrate preferred and alternate embodiments of the invention. The drawings shall not be construed to limit the scope of the invention which shall solely be limited by the attached claims.
Fig. 1 shows in a schematic drawing a system according to an embodiment of the invention. Additional components of wind turbine power production systems, such as oil filters, booster pump, oil reservoir, valves, control unit etc. can be found in prior art, e.g. international patent application W02007/053036 A1.
Fig. 2a illustrates an imagined air cylinder moving with the speed of the wind and blowing through a rotating propeller of a wind turbine. The circle described by the rotating wing tip envelopes the area swept by the turbine, and a length of the cylinder of air passing the turbine in one revolution of the turbine is indicated. When the wind speed increases the imagined cylinder is moving faster towards the turbine and the turbine rotational speed must increase to exploit all the energy of the moving wind mass.
Fig. 2b illustrates the ratio between the turbine tip speed and the wind speed. This is the so-called the tip speed ratio (TSR). The optimised tip speed ratio (TSRₒₚₜ) is a linear relationship between turbine speed and wind speed for a given turbine design. It is shown that a turbine with 2 blades should rotate faster than a 4 bladed turbine, given that the blade design of the two turbines are comparable, to exploit maximum energy from the wind.
Fig. 2c Illustrates a graph of the power coefficient Cp versus TSR, the tip speed ratio for a given turbine design. It is shown that the power coefficient has a maximum value for the optimised tip speed ratio (TSRₒₚₜ).
Fig. 2d illustrates that increased wind speed should result in increased turbine speed to increase the pressure in closed loop hydrostatic system, resulting in increased power output. However, maximum pressure does not necessarily correspond to maximum power.
Fig. 3 shows in a block diagram the model of the aerodynamics of the wind turbine power production system implemented in the control unit in an embodiment of the invention.
Fig. 4 shows in a block diagram the model of the hydraulic transmission system of the wind turbine power production system implemented in the control unit in an embodiment of the invention.
Fig. 5 shows in a block diagram the principle of wind speed estimation according to an embodiment of the invention.

### Embodiments of the invention

Embodiments of the present invention will now be described in greater detail with reference to the accompanying drawings. It should be noted that the embodiments given below are exemplary only, and they are not limiting for the invention.

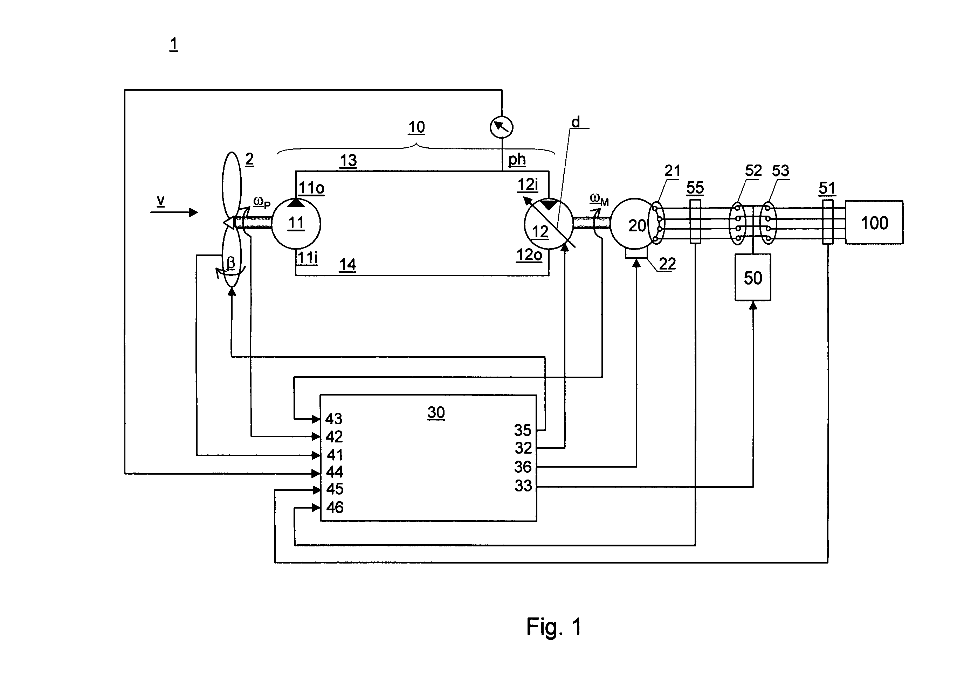

The present invention relates to wind turbines and the control of wind turbines where the electric generator is driven by a hydrostatic transmission system with a closed loop hydrostatic system. An embodiment of the invention will now be described with reference to Fig. 1.

In an embodiment the invention is a wind turbine power production system (1) comprising, a turbine rotor (2) with a turbine rotational speed (ωp), an electric generator (20) and a closed loop hydraulic transmission system (10) comprising a hydraulic pump (11) and a hydraulic motor (12) with a variable displacement (d). The hydraulic transmission system (10) is arranged for the transfer of mechanical energy from the turbine rotor (2) to the electric generator (20). The wind turbine power production system (1) further comprises a control unit (30) arranged for continuously;
- receiving a high pressure measurement signal (44) representing a hydraulic pressure (ph) of the closed loop hydraulic transmission system (10),
- predicting an estimated wind speed (v*) of a wind acting on the turbine rotor (2) based on at least the hydraulic pressure (ph) represented by the high pressure measurement signal (44),
- calculating an optimised turbine rotational speed (ωₚ*) of the turbine rotor (2) based on at least the estimated wind speed (v*),
- sending a displacement control signal (32) to control the variable displacement (d) of the hydraulic motor to maintain the turbine rotational speed (ωₚ) at the same value as the optimised turbine rotational speed (ωₚ*).

The optimised turbine rotational speed (ωₚ*) will vary with the wind acting on the turbine rotor (2) according to the fluctuations in the wind speed.

According to an embodiment the invention is also a method for controlling a wind turbine power production system (1) as described above comprising the following steps;
- receiving in the control unit (30) a high pressure measurement signal (44) representing a hydraulic pressure (ph) of the closed loop hydraulic transmission system (10),
- predicting in the control unit (30) an estimated wind speed (v*) of a wind acting on the turbine rotor (2) based on at least the hydraulic pressure (ph) represented by the high pressure measurement signal (44),
- calculating in the control unit (30) an optimised turbine rotational speed (ωₚ*) of the turbine rotor (2) based on at least the estimated wind speed (v*),
- sending a displacement control signal (32) from the control unit (30) to control the variable displacement (d) of the hydraulic motor to maintain the turbine rotational speed (ωₚ) at the same value as the optimised turbine rotational speed (ωₚ*), to maintain an optimised tip speed ratio for the turbine rotor (2).

Both for the system and the method the tip speed ratio is optimised to the value that gives the maximum power coefficient at the top of the curve according to the description given previously in this document.

The electric generator (20) can be directly connected to the grid (100) via a main breaker (50) as can be seen in Fig. 1 without any full or half converters in-between. In Fig. 1 the electric generator (20) comprises electric output terminals (21) directly connected to first contacts (52) of the main breaker (50) where second contacts (53) of the main breaker (50) are connected to the electric grid (100). The operation of the main breaker (50) can be controlled by the breaker control signal (33) from the control unit (30). The grid (100) can in this context mean point Point of Common Connection, PCC.

In an embodiment the estimated wind speed (v*) is the average wind speed acting on the swept area of the turbine rotor (2). Large turbine rotors may have a diameter of 100 - 150 meters, and an anemometer according to prior art arranged near the turbine rotor, or in the swept area of the turbine, cannot easily measure accurately the wind speed acting on the turbine. Wind speed varies with the height above ground or sea level, and will also be affected by the turbine rotor that reduces the wind speed. In addition wind speed will fluctuate differently from one point to another within the swept area of the turbine rotor. The system and method according to the invention therefore has the advantage that wind fluctuations can be estimated more accurately. In addition the hydraulic drive train with variable displacement is able to respond quickly to the fluctuations in wind and to drive an electric generator without the use of converters between the generator and the electric grid.

According to an embodiment of the invention the control unit is arranged for controlling the power output from the wind turbine power production system by controlling the pitch angle (β) when the wind turbine power production system (1) operates in full power production mode, i.e. the estimated wind speed (v*) is above maximum rated wind speed for the system. In this embodiment the power output will be kept at a constant level during fluctuating wind conditions above the rated maximum wind speed.

According to an embodiment of the invention the control unit (30) is a digital control unit. A digital control unit allows the complex behaviour of the wind turbine power production system (1) to be modelled in the control unit (30). Analog to digital conversion of input signals and Digital to analog conversion of output signals is performed when analog sensors or actuators are connected to the control unit (30) as will be understood by a person skilled in the art. The digital control unit may comprise one or more microcontrollers or processors. Digital controllers allow easy setting of set values, the use of software for control algorithms, and condition monitoring of the states of the turbine power production system. It also allows model based control of the system as described below.

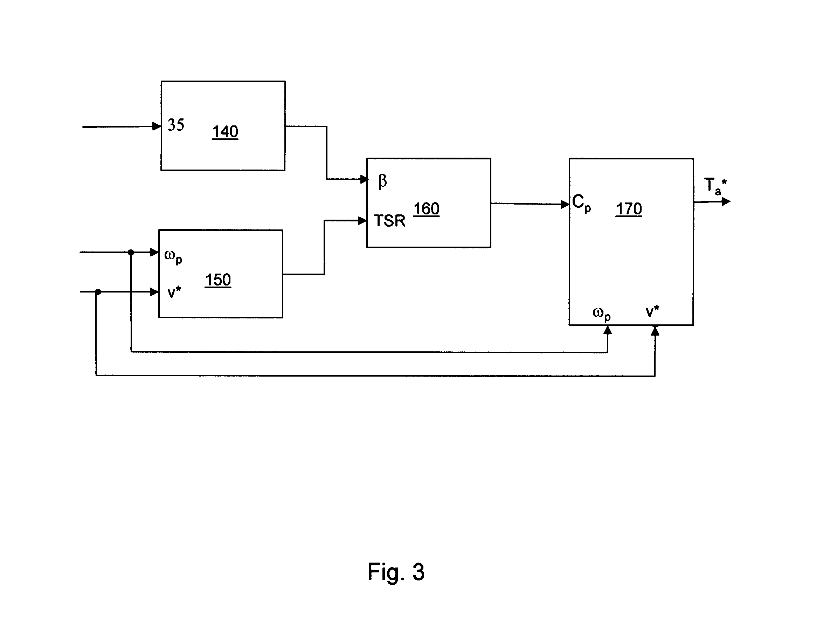

The aerodynamics of the wind turbine power production system is in an embodiment modelled as shown in Fig. 3. As it can be seen in the figure the model is set up of different parts, the pitch actuator model (140), the Tip Speed Ratio model (150), the Blade Power Coefficient model (160) and the aerodynamic torque model (170). The Pitch actuator model (140) is a linear system with an input given by the pitch control signal (35), which is provided by the control unit (30). The output of the pitch actuator model (140) is the current pitch angle (β).

The tip speed ratio (TSR) is calculated based on the turbine rotational speed (ωₚ) and the estimated wind speed (v*) in order to input it to the Blade Power Coefficient model (160) along with the current pitch angle (β). Blade Power Coefficient model (160) is in an embodiment a three dimensional lookup table for the blades of the wind turbine used to determine the turbine rotor power coefficient (Cp) based on the current pitch angle (β) and the tip speed ratio (TSR). The aerodynamic estimated torque (Ta*) is calculated based on the turbine rotor power coefficient (Cp) the turbine rotational speed (ωₚ) and the estimated wind speed (v*) in the aerodynamic torque model (170).

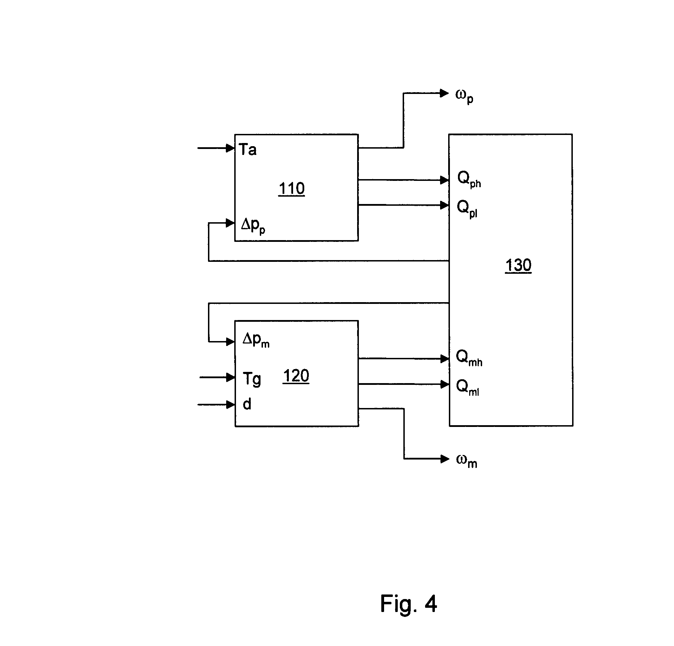

The closed loop hydraulic system (10) of the wind turbine power production system is in an embodiment modelled as shown in Fig. 4, comprising in an embodiment the hydraulic pump model (110), the hydraulic motor model (112) and the pipe and boost system model (130). The pipe and boost system model (130) comprises hydraulic parts of the closed loop hydraulic system apart from the hydraulic pump (11) and the hydraulic model (12) that have separate models.

The hydraulic pump model (110) of the hydraulic pump (11) includes efficiency, leakage, inertia of the unit. Fixed or variable displacement is also modelled. In Fig. 4 it is shown a pump model with fixed displacement. Given the turbine torque (Ta) and the pump pressure difference (Δpₚ) between the pump input (11i) and the pump output (11o) of the hydraulic pump (11) as inputs the hydraulic pump model (110) calculates the turbine rotational speed (ωₚ), and the pump high pressure flow (Qph) into the high pressure line (13) and the pump low pressure flow (Qpl) from the low pressure line (14).

The hydraulic motor model (120) of the hydraulic motor (12) is similar to the hydraulic pump model (110) except that the value of the variable displacement (d) is included as an input to the model in this embodiment as can be seen in Fig. 4. Given the generator torque (Tg) and the motor pressure difference (Δpₘ) between the motor input (12i) and the motor output (12o) of the hydraulic motor (21) as inputs the hydraulic motor model (120) calculates the generator rotational speed (ω_{M}), and the motor high pressure flow (Qmh) from the high pressure line (13) and the motor low pressure flow (Qml) to the low pressure line (14).

According to an embodiment of the invention the control unit (30) comprises a Kalman estimator (301).

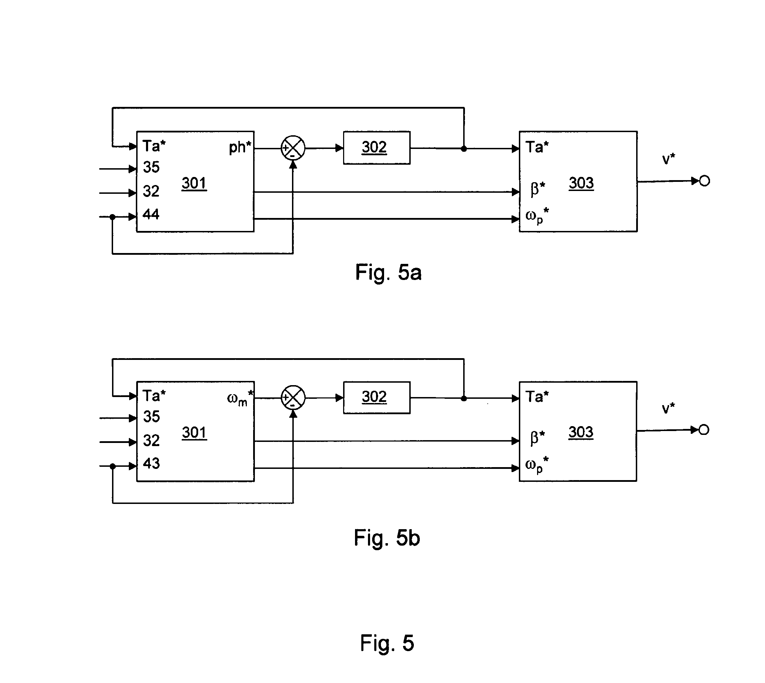

Fig. 5 shows in a block diagram the principle of wind speed estimation according to an embodiment of the invention.In this embodiment a Kalman estimator is comprised in the control unit for the purpose of estimating an estimated wind speed (v*). In Fig. 5a it is shown how the estimated wind speed (v*) is derived from, among other parameters, a difference between the hydraulic pressure (ph) of the high pressure line (13) represented by the high pressure measurement signal (44), and the estimated hydraulic pressure (ph*).

In this embodiment the Kalman estimator (301) in a power production mode is arranged for receiving a high pressure measurement signal (44) and estimating an estimated hydraulic pressure (ph*). The control unit (30) comprises a PI controller (302) arranged for calculating an estimated turbine torque (Ta*) exerted on a turbine shaft (3) of the turbine rotor (2) based on a difference between the hydraulic pressure (ph) represented by the high pressure measurement signal (44) and the estimated hydraulic pressure (ph*). The Kalman estimator (301) is further arranged for receiving the estimated turbine torque (Ta*) as an input parameter.

In an embodiment the Kalman estimator (301) is further arranged for receiving the displacement control signal (32) and the pitch control signal (35) in addition to the high pressure measurement signal (44) and the estimated turbine torque (Ta*) as can be seen in Fig. 5a and Fig. 5b. In an embodiment of the invention the pitch angle (β) is fixed when the wind turbine power production system operates in the normal power production mode and the produced power is below the maximum power of the wind turbine system. In this embodiment the pitch control signal (35) is not necessary for estimating the estimated wind speed (v*). i.e. it can be set in the Kalman filter to a fixed value.

Before normal power production and connecting the synchronous generator (20) to the grid (100) the wind turbine power production system (1) and the control unit (30) will be in a start up mode. In this mode estimated wind speed (v*) can be estimated according to an embodiment of the invention illustrated in Fig. 5b.

In this embodiment the Kalman estimator (301) is arranged for receiving a generator rotational speed signal (43) and estimating an estimated generator rotational speed (ωₘ*). the PI controller (302) arranged for calculating the estimated turbine torque (Ta*) based on a difference between the generator rotational speed (ωₘ) represented by the generator rotational speed signal (43) and an estimated generator rotational speed (ωₘ*).

In an embodiment the Kalman estimator (301) is further arranged for receiving the displacement control signal (32) and the pitch control signal (35) in addition to the generator rotational speed signal (43) and the estimated turbine torque (Ta*) as can be seen in Fig. 5b when the control unit (30) is in the start up mode.
- receiving in the Kalman estimator (301) a generator rotational speed signal (43),
- calculating in the PI controller (302) the estimated turbine torque (Ta*) based on a difference between a generator rotational speed (ωₘ*) represented by the generator rotational speed signal (43) and an estimated generator rotational speed (ωₘ*) _{,,}
- receiving in the Kalman simulator (301) the estimated turbine torque (Ta*).

An advantage of the two step process of wind speed estimation according to the invention, i.e. the separate PI controller (302) used for calculating the input to the Kalman estimator is that the process of estimating wind speed can be simplified and improves accuracy of the estimate.

According to an embodiment of the invention the estimated wind speed (v*) can be estimated by separate Kalman filters and PI controllers as illustrated in Fig. 5. Fig. 5a shows a Kalman filter and PI controller used in normal production mode, while Fig. 5b shows another Kalman filter and PI controller used in start up mode. However, in another embodiment of the invention the same Kalman filter and PI controller is used for both the normal production mode and start up mode, where the Kalman filter is arranged for receiving both the high pressure measurement signal (44) and the generator rotational speed signal (43). In normal production mode this Kalman filter will make use of the high pressure measurement signal (44) for the estimation, while the generator rotational speed signal (43) is used for start up mode. In this mode the Kalman filter will be set in one of the two modes by the control unit (30) or will itself detect the correct mode based on the available input parameters. In the case where more than one Kalman estimator is used the control system will control the operation of the Kalman filters and switch from one to the other according to the current mode.

According to an embodiment of the invention the Kalman estimator is arranged for also receiving the displacement control signal (32) and estimate an estimated turbine rotational speed (ωₚ*) as described above. The wind turbine power production system (1) further comprises a lookup table (303) as seen in Fig. 5a and Fig. 5b arranged for returning the estimated wind speed (v*) as a function of at least the estimated turbine torque (Ta*) and the estimated turbine rotational speed (ωp*). The control unit (30) is in this embodiment arranged for looking up the estimated wind speed (v*) in the lookup table (303) based on at least the estimated turbine torque (Ta*) and the estimated turbine rotational speed (ωp*). In an embodiment of the invention the estimated pitch angle (β*) is fixed when the wind turbine power production system operates in the normal power production mode and the produced power is below the maximum power of the wind turbine system. In this embodiment the estimated pitch angle (β*) may be set to a fixed value when looking up the estimated wind speed (v*) in the lookup table (303) instead of receiving the estimated pitch angle (β*) from the Kalman filter (301).

The turbine rotor (2) may have a variable pitch angle (β) and the control unit (30) is in this embodiment arranged for sending a pitch control signal (35) to the turbine rotor (2) to adjust the pitch angle (β).

In an embodiment the electric generator (20) is a synchronous generator. The use of a synchronous generator has several advantages over induction generators, but requires the generator to operate in full synchronization with the electric grid (100), which has not been easily achievable with prior art technology without the use of converters. However according to the present invention synchronous generators can be used even without half or full controlled converters between the synchronous generator and the electric grid (100).

One of the advantages of synchronous generators is the possibility of controlling reactive power. According to an embodiment of the invention the power factor of the electric power produced by the turbine power production system (1) is controlled by an exciter unit (22) of the electric generator (30). The power factor can also be set from the control unit (30) by an excitation control signal (36). In Fig. 1 it is shown that the control unit (30) may be arranged to receive grid power measurement signal (45) representing the characteristics, such as Voltage, Current and phase angle of the power on the grid from a grid power sensor (51). It is also shown that the control unit (30) may be arranged to receive generator power measurement signal (46) representing the characteristics, such as Voltage, Current and phase angle of the power from the generator from a generator power sensor (55).

## Claims

1. A wind turbine power production system (1) comprising, a turbine rotor (2) with a turbine rotational speed (ωₚ), an electric generator (20) and a closed loop hydraulic transmission system (10) comprising a hydraulic pump (11) and a hydraulic motor (12) with a variable displacement (d), said hydraulic transmission system (10) arranged for the transfer of mechanical energy from said turbine rotor (2) to said electric generator (20), said wind turbine power production system (1) further comprising a control unit (30) arranged for continuously;
- receiving a high pressure measurement signal (44) representing a hydraulic pressure (ph) of said closed loop hydraulic transmission system (10),
- predicting an estimated wind speed (v*) of a wind acting on said turbine rotor (2) based on at least said hydraulic pressure (ph) represented by said high pressure measurement signal (44),
- calculating an optimised turbine rotational speed (ωₚ*) of said turbine rotor (2) based on at least said estimated wind speed (v*),
- sending a displacement control signal (32) to control said variable displacement (d) of said hydraulic motor to maintain said turbine rotational speed (ωₚ) at the same value as said optimised turbine rotational speed (ωₚ*),
to maintain an optimised tip speed ratio for said turbine rotor (2).

2. A wind turbine power production system (1) according to claim 1, wherein said control unit (30) is a digital control unit.

3. A wind turbine power production system (1) according to claim 2, wherein said control unit (30) comprises a Kalman estimator (301).

4. A wind turbine power production system (1) according to claim 3, wherein said Kalman estimator (301) is arranged for receiving said high pressure measurement signal (44) and estimating an estimated hydraulic pressure (ph*), and said control unit (30) comprises a PI controller (302) arranged for estimating an estimated turbine torque (Ta*) exerted on a turbine shaft (3) of said turbine rotor (2) based on a difference between said hydraulic pressure (ph) represented by said high pressure measurement signal (44) and said estimated hydraulic pressure (ph*) , where said Kalman estimator (301) is further arranged for receiving said estimated turbine torque (Ta*).

5. A wind turbine power production system (1) according to claim 4, wherein said Kalman estimator (301) in a start up mode is arranged for receiving a generator rotational speed signal (43) and estimating an estimated generator rotational speed (ωₘ*), said PI controller (302) arranged for calculating said estimated turbine torque (Ta*) based on a difference between said generator rotational speed (ωₘ) represented by said generator rotational speed signal (43) and an estimated generator rotational speed (ωₘ*).

6. A wind turbine power production system (1) according to claim 4 or 5, wherein said Kalman estimator is arranged for receiving said displacement control signal (32) and estimate an estimated turbine rotational speed (ωₚ*), said wind turbine power production system (1) further comprising a lookup table (303) arranged for returning said estimated wind speed (v*) as a function of at least said estimated turbine torque (Ta*) and said estimated turbine rotational speed (ωₚ*), said control unit (30) arranged for looking up said estimated wind speed (v*) in said lookup table (303) based on at least said estimated turbine torque (Ta*) and said estimated turbine rotational speed (ωₚ*).

7. A wind turbine power production system (1) according to claim 1, where said turbine rotor (2) has a variable pitch angle (β) and said control unit (30) is arranged for sending a pitch control signal (35) to said turbine rotor (2) to adjust said pitch angle (β).

8. A wind turbine power production system (1) according to claim 1, where said electric generator (20) is a synchronous generator.

9. A wind turbine power production system (1) according to claim 8, where a power factor of a the electric power produced by said turbine power production system (1) is controlled by an exciter unit (22) of said electric generator (30).

10. A method for controlling a wind turbine power production system (1), wherein said wind turbine power production system (1) comprises, a turbine rotor (2) with a turbine rotational speed (ωₚ), a synchronous electric generator (20) and a closed loop hydraulic transmission system (10) comprising a hydraulic pump (11) and a hydraulic motor (12) with a variable displacement (d), said hydraulic transmission system (10) arranged for the transfer of mechanical energy from said turbine rotor (2) to said synchronous electric generator (20), said wind turbine power production system (1) further comprising a control unit (30), said method comprising the following steps;
- receiving in said control unit (30) a high pressure measurement signal (44) representing a hydraulic pressure (ph) of said closed loop hydraulic transmission system (10),
- predicting in said control unit (30) an estimated wind speed (v*) of a wind acting on said turbine rotor (2) based on at least said hydraulic pressure (ph) represented by said high pressure measurement signal (44),
- calculating in said control unit (30) an optimised turbine rotational speed (ωₚ*) of said turbine rotor (2) based on at least said estimated wind speed (v*),
- sending a displacement control signal (32) from said control unit (30) to control said variable displacement (d) of said hydraulic motor to maintain said turbine rotational speed (ωₚ) at the same value as said optimised turbine rotational speed (ωₚ*),
to maintain an optimised tip speed ratio for said turbine rotor (2).

11. A method for controlling a wind turbine power production system (1) according to claim 1, wherein said control unit (30) is a digital control unit and comprises a Kalman estimator (301).

12. A method for controlling a wind turbine power production system (1) according to claim 11, wherein said control unit (30) comprises a PI controller (302) comprising the following steps when said wind turbine power production system (1) is in a power production mode;
- receiving in said Kalman estimator (301) said high pressure measurement signal (44),
- calculating in said PI controller (302) an estimated turbine torque (Ta*) exerted on a turbine shaft (3) of said turbine rotor (2) based on a difference between said hydraulic pressure (ph) represented by said high pressure measurement signal (44) and an estimated hydraulic pressure (ph*),
- receiving in said Kalman simulator (301) said estimated turbine torque (Ta*).

13. A method for controlling a wind turbine power production system (1) according to claim 12, comprising the following steps when said wind turbine power production system (1) is in a start up mode;
- receiving in said Kalman estimator (301) a generator rotational speed signal (43),
- calculating in said PI controller (302) said estimated turbine torque (Ta*) based on a difference between a generator rotational speed (ωₘ*) represented by said generator rotational speed signal (43) and an estimated generator rotational speed (ωₘ*) ,,
- receiving in said Kalman simulator (301) said estimated turbine torque (Ta*).

14. A method for controlling a wind turbine power production system (1) according to claim 12 or 13, comprising the following steps;
- receiving in said Kalman estimator (301) said displacement control signal (32),
- estimating in said Kalman estimator (301) an estimated turbine rotational speed (ωₚ*)
- looking up said estimated wind speed (v*) in a lookup table (303) based on at least said estimated turbine torque (Ta*) and said estimated turbine rotational speed (ωₚ*).
